# EUROPEAN PATENT APPLICATION

(11) **EP 1 354 743 A1**
(43) Date of publication of application: **22.10.2003**
(21) Application number: 01994845.4
(22) Date of filing: 28.12.2001
(51) Int. Cl.: B60J 11/00, B60J 3/00, B60J 1/20

(54) **IMPROVED FOLDABLE SUNSHADE FOR VEHICLES**

(30) Priority: 26.01.2001 ES 200100198 U
(71) Applicant: The Clipy Company, L.l.c., 28012 Madrid (ES)
(72) Inventor: KARPRISKY, Paul, E-28012 Madrid (ES)
(74) Representative: Munoz Garcia, Antonio
(86) International application number: ES0100511
(87) International publication number: WO02058953

(57) **Abstract**

An improved foldable sunshade for vehicles, consisting of an approximately rectangular shaped laminar body having a metallic coating on one of its sides, being subdivided into approximately rectangular cross-links having a rectangular perforation and two trapezoidal protrusions or flaps in the outer area, having slit lines permitting multiple folding of the general laminar body and having retaining means of the folded body forming a rectangular shaped parallelepiped.

## Description

### OBJECT OF THE INVENTION

The present specification refers to an improved foldable sunshade for vehicles, whose evident object lies on permitting the protection of the interior of a vehicle, being fitted to the internal structure of the vehicle windshield, accordingly protecting the interior as well as the dashboard and steering wheel area. The surface of the sunshade exposed to the rays of the sun has a metallic sheet covering, which implies having a maximum quality reflective surface and resistance against the heat, the sunshade structure having a plurality of slit fold lines forming a suitable cross-linking on the sunshade structure, permitting its folding until obtaining a rectangular shaped parallelopipedic body of suitable dimensions for being incorporated in the vehicle side pockets located on the doors or in any compartment of the front structure of the carrier vehicle, occupying a very reduced space, which implies ensuring the possibility of its use when the vehicle is parked in areas where the sun can act upon the vehicle, protecting the instrument panel and maintaining a suitable temperature inside the vehicle.

### FIELD OF THE INVENTION

This invention has its application within the industry dedicated to manufacturing sunshades and protectors for automotive vehicles.

### BACKGROUND OF THE INVENTION

A sunshade for vehicles is known by US Patent number 4,671,335, which discloses and claims a foldable sunshade that can be placed in a vehicle windshield, having lateral and longitudinal dimensions defining lateral and longitudinal edges so as to prevent sunrays from passing through said windshield, said longitudinal edges being arched, the sunshade including a plurality of lateral folds extending from one longitudinal edge to another, defining foldable panels on a superimposed panel in the form of an accordion, around said folds towards a longitudinally middle lateral fold, in order to close said sunshade in an intermediate position defining a first and second panel packet, each one of said panels having a frontal and rear surface, and also having a longitudinal fold line substantially arranged half-way between said lateral longitudinal edges and completely extending on each one of said panels, the longitudinal fold lines of the panels extending in different directions in an alternating manner on each side of the longitudinally intermediate lateral fold, with regard to the surfaces of said panels, defining mirror images of the others and a coextensive slit with said longitudinally intermediate lateral fold, which extends from a longitudinal lateral edge up to said longitudinal fold line, the first and second foldable packet being located in opposite directions around said longitudinal folding line in order to further close said sunshade.

It is also mentioned in the set of claims that the sunshade is arched in the longitudinal dimension, defining upper and lower curved edges and said lateral folds are substantially radial, defining a trapezoidal shaped panel, said panel folds not laterally coinciding in their alignment in relation to the adjacent panel folds, each one being substantially parallel to its lower panel edge.

The sunshade also includes a cut having a dimension for housing the support for the rearview mirror of the automobile, said cut arranged on the upper edge of the sunshade.

It must be indicated that this invention, which is intended to be used in the same field, applicable in all currently existing sunshades, significantly differs from the invention disclosed in the present specification in that the plan view areas of both sunshades have significantly remarkable differences, such as the fact that the invention filed with number US 4,671,334 has a significantly curved upper side and lower side, respectively adopting the concave and convex shape, whereas the central areas corresponding to or coinciding with the central area of the larger side has diagonal cuts in opposing directions followed by echelons with blunt vertices, while the invention disclosed in this specification has completely straight sides, having a central recess with a rectangular plan, coinciding with the central area of the larger upper side.

Likewise, the filed invention incorporates a body of a material provided with a plurality of slit lines generating the existence of rectangular areas with identical width and a two by two differentiated length, other rectangular areas existing in the separation line of the upper and lower rectangular areas, which generate the possibility of folding the panel constituting the sunshade, consequently obtaining the formation of a parallelepipedic body that, by means of elements emerging from the sunshade body itself, achieve coupling all the duly folded areas without there being any protrusion in its context, on the upper or lower part, forming a rectangular and parallelepipedic body, features that are not contemplated in the recovered and aforementioned invention.

Utility Model filed in Spain with number 287593/4 discloses a sunshade for automobiles constituted as from a laminar body, preferably of cardboard, coincident with or approximating the windshield dimensions, with the particularity of its having a plurality of defined transversal fold lines determining dimensionally close sectors that overlap one another when the assembly is folded to form a likewise laminar body of a slightly larger thickness but of a considerably smaller profile.

Advertising graphics are incorporated on the outer side of the suitably unfolded laminar body.

On the upper edge of the laminar body, the invention has determining notches for each handle, with the particularity that the handles thus formed and corresponding to the different sectors are stacked with the folding of the laminar body, defining multiple handles for transporting.

Utility Model filed in Spain with number 291,134/5 discloses a sunshade for vehicles, having its application in the inner part of the rear window, shaped as a preferably cardboard laminar body of dimensions closely matching the body which it is coupled to, having a plurality of folding lines, which are suitably distributed so that the entire body can reduce its surface dimensions when not in use by means of a zigzag folding, or any other type of folding.

Utility Model filed in Spain with number 293,641/0 discloses a solar protector for vehicles, which is shaped as from a cardboard sheet provided with transversally positioned slit lines, consequently permitting the reduction of its shape dimensions by permitting its juxtaposition, incorporating a rectangular recess in the central zone of the larger area or larger upper side, coincident with two of the central zones delimited by the slit lines facilitating the folding.

Utility Model filed with number 292,992/9 discloses an advertising sunshade shaped as from a laminar component of a stiff nature and, like the previous ones, having transversal slit fold lines, having a recess coinciding with the central zone of the larger upper side, also like the previous ones, permitting the incorporation of advertising graphics.

Utility Model filed in Spain with number 8701272 discloses a foldable screen for protecting the vehicle interior against the rays of the sun, characterized in that close to one of its longitudinal edges, it has a pair of trepanned lines that can permit its being torn with the object of achieving the possibility that the determined longitudinal band between each of the trepanned lines can be independent from the rest of the screen, and, consequently, can be fitted to the inner part of the windshield or rear window of smaller sized vehicles, a slanted trepanned line having been foreseen, also between said longitudinal edge and an area of each side next to the respective corner opposite the longitudinal edge, that can be torn or folded in order to adapt the profile of the protective screen to the shape of the determined vehicle windows.

On the part of the applicant, it has been confirmed that, although in all cases the use of this type of sunshade has a plurality of benefits in both its use as a protective element and as vehicular advertising, in many cases, the use of this type of element is reduced due to its display dimensions and maintenance in the vehicle interior, since, due to the same reasons, the users transport them in the trunks of the vehicles, not using them in a conventional manner except in certain applications, generally for not being at the user's disposal in an internal part of the vehicle, always insisting that the problem originates as from its folded dimensions.

The distribution of these objects is also hindered according to its dimensions, since sending it by mail is significantly expensive for having physical features exceeding the permitted dimensions, the distribution being carried out either with excessive rates or by means of a messenger service, which implies a significant increase in its costs that in many cases cannot be afforded.

The evident solution to this problem would be to have a sunshade of suitable features for the purpose it is required for, effectively protecting the vehicle interior, located in either the inner zone of the windshield or in the inner zone of the rear window, also being able to have general advertising graphics, and also, due to its pertinent development and slit fold lines, would permit its use in a conventional manner although it would have very reduced dimensions when suitably folded, consequently facilitating the possibility of being transported in either the glove compartment or in the internal side pockets of the vehicle doors, occupying a very reduced volume, similar to that of a video tape or similar.

According to its structural dimensions once folded, the sunshade will always be located in a point in the vehicle interior where the user could carry out its incorporation and subsequent removal and placement without any type of problems, also permitting its being sent by mail in a conventional manner without using excessive rates or messenger services according to the dimensions of the folded sunshade.

However, the applicant has no knowledge of the current existence of an invention having the features previously indicated as suitable.

### DESCRIPTION OF THE INVENTION

The improved foldable sunshade for vehicles proposed by the invention is shaped as an evident solution to the previously described problem, having a body of a very reduced volume in relation to those known up to now due to the existence of a plurality of slit fold lines on the body of the sunshade, generating the final shape of this sheet constituting the foldable sunshade as a rectangular shaped prismatic body provided with retention means on one of its ends coinciding with one of its smaller sides.

More specifically, the improved foldable sunshade for vehicles object of the invention is constituted by a laminar body provided with a metallic coating on one of its sides and generally manufactured from cardboard or suitable material.

The laminar body is provided with a blunt shape on two of its ends coinciding with its corners on the left side, while the opposite side has two identical zones oppositely placed having a central trapezoidal recess in its outer area, generating the existence of two tabs surpassing the perimetral line of the sheet, having two also trapezoidal shaped protrusions or flaps on points close to its upper end but originating from its larger sides.

The sheet is subdivided into twenty-nine areas separated from each other by means of die-cut slit lines, having two alignments in the upper and lower part coinciding with its largest sides shaped as approximately rectangular areas without these rectangles being perfect, since some of their sides have a slight slant so that when the folding is being out, it is possible to transform the laminar body into a rectangular shaped parallelepiped.

There is an alignment of rectangular areas of similar length and width slowly increasing from left to right separating the areas located on the upper and lower part, shaping the sides that will be coupled two by two, forming the edge of the parallelepipedic body required of the laminar body.

In the upper alignment, the existence of a recess has been foreseen in coincidence with the two central rectangles intended to save the rear view mirror, and coinciding with this recess on the left side, the existence of several recesses has been foreseen in the upper zone of the semi-rectangular area located on this point for anchoring the retaining body.

A rectangular shaped piece is clipped with pressure in this area, having a vertical protrusion on the lower side provided with fixing means onto the body of the sunshade, manufactured of cardboard as has been previously said or of any other similar element, this piece shaping the retention area of the ends of the folded sunshade.

### DESCRIPTION OF THE DRAWINGS

To complement the description being carried out and with the object of helping to better understand the features of the invention, three sheets of drawings accompany the present specification as an integral part thereof, which show the following with an illustrative and non-limiting character:
Figure number 1.- Shows a development view of the object of the invention, relative to an improved foldable sunshade for vehicles.
Figure number 2.- Shows a perspective view by the lower area of the retaining piece.
Figure number 3.- Shows a plan view of the object shown in figure number 2.
Figure number 4.- Shows a side elevational view of the end of the sunshade where the sustaining link is fixed.
Figure number 5.- Shows an A-B view of the object shown in figure number 4.
Figure number 6.- Shows a plan view of one of its larger sides of the folded object, shown unfolded in figure number 1.
Figure number 7.- Shows a side elevational view of the object shown in figure number 6, being possible to see the folds carried out on the structure of the object shown in figure number 1, with the object of reducing its volume.

### PREFERRED EMBODIMENT OF THE INVENTION

In view of figure number 1, it can be seen how the improved foldable sunshade (1) for vehicles is constituted as from a laminar body with a suitably metallic coating on one of its sides, whose body presents a plurality of slit lines (60) constituting as many other folding lines, ten approximate rectangles (2), (3), (4), (5), (6), (7), (8), (9), (10) and (11) having been arranged on the upper part, as many other approximate rectangles referenced with (21), (22), (23), (24), (25), (26), (27), (28), (29) and (30) existing in the opposite area of the laminar body (1).

Between both alignments of the approximately rectangular areas or zones, there are rectangular zones of growing width although of similar length referenced with (41), (42), (43), (44), (45), (46), (47), (48), (49) and (50) occupying the central area and longitudinally positioned contrary to said ones being transversally located.

The areas (2) and (21) are equal to each other, as well as the areas (3) and (22), (4) and (23), (8) and (27), (9) and (28), (10) and (29), and (11) and (30).

The areas (6) and (7) have a width similar to those mentioned but a smaller length, the laminar body of the sunshade (1) having a recess in the central area of the upper larger side.

Likewise, in its cross-linked zone or area (5), the laminar body (1) has an outer mechanism in coincidence with the smaller outer side for incorporating the retaining element (70) that will later be descprotrusioned.

It should be reiterated that the horizontal rectangular zones located in the central zone between said approximately rectangular zones have a growing thickness from the left end to the right, being referenced with (41), (42), (43), (44), (45), (46), (47), (48), (49) and (50).

The right end is occupied by the transversal rectangular zones (11) and (30), having two protuberances or tabs on both ends in coincidence with its smaller outer side, generating the existence of a central trapezoidal recess, the emerging tabs being referenced with (12) in the area (11), and (31) in the area (30), also having two trapezoidal flaps or protrusions (13) and (32) in coincidence with the two larger sides respectively in the zones (11) and (30).

When the folding is carried out, the sides (10) and (12) as well as the (29) and (31) are adjacent, the central areas (49) and (50) acting as an edge, so that next the areas (8) and (9) as well as the areas (7) and (28) are adjacent or superimposed, the juxtaposition of the central areas (47) and (48) forming the edge.

Next, the areas (6) and (7) as well as the areas (25) and (26) are backed to each other, the juxtaposition of the central areas (45) and (46) forming the central edge.

The next fold is formed by the juxtaposition of the areas (4) and (5) as well as (23) and (24), the areas (43) and (4) forming the edge, slowly obtaining establishing a central area of similar thickness, identical length but slowly smaller width, which, when carrying out the last fold formed by the juxtaposition of the areas (2) and (3), (21) and (22), whose edge is formed by the central juxtaposed areas (41) and (42), results in obtaining a parallelopipedic rectangular shaped body having four pairs of flaps in coincidence with its largest sides, collaborating in its unfolding, being retained by the piece (70) on the smaller remaining side forming the edge.

Having established the previously said folding configuration generating the transformation of the extended laminar body into a shape adopting the form of a parallelopipedic prism, this is maintained due to the existence of a series of slits and perforations in the semi-rectangular area (5) to which a body of plastic material is coupled (70), having a rectangular shape, having a flat area (72) whose largest sides originate two vertical zones (71) and (71') intended to retain the sides of the laminar body transformed into a rectangular parallelopipedic piece in its inner zone, a vertical protrusion existing in the lower area of the side (72), having a vertical rectangular area (73) to which the areas (74) are in parallel position, located in the central part provided with a protrusion in its lower area with the object of being suitably embedded in a rectangular perforation existing in the area (5) of the sunshade (1), rectangular area referenced with (5'), having a vertical slit line (5'') next to it with the object of facilitating the fixation and passing of a protrusion (77) originating from the body (73), being delimited by protrusions (76) and (76') on its sides, and a protrusion (75) in the opposite area, the laminar body of the area (5) passing through the slits existing between the body or protrusion (73) and the parallel protrusions (76), (76') and (75), being coupled in the protrusion (77) and fixed to the lower area of the thickness (74).

Once the piece (70) is fixed, the laminar body transformed into a parallelepiped is retained by its free side, opposite the one provided with the plurality of folds.

With the object of facilitating the extraction and liberation of the laminar body, the zones (11) and (30) have protrusions (31) and (32)as has been previously indicated.

These same areas (11) and (32) have protrusions (12) and (31) on their smaller outer sides, generating a central trapezoidal recess, also collaborating in fixing the sunshade transformed into a parallelopipedic body by the piece (70) acting as a retaining clip by means of its sides (71) and (71').

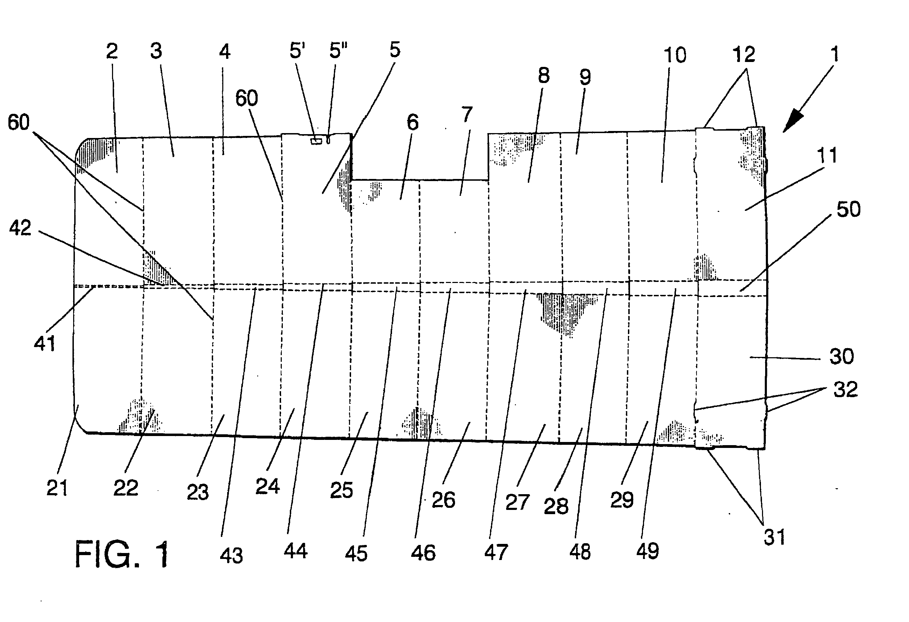

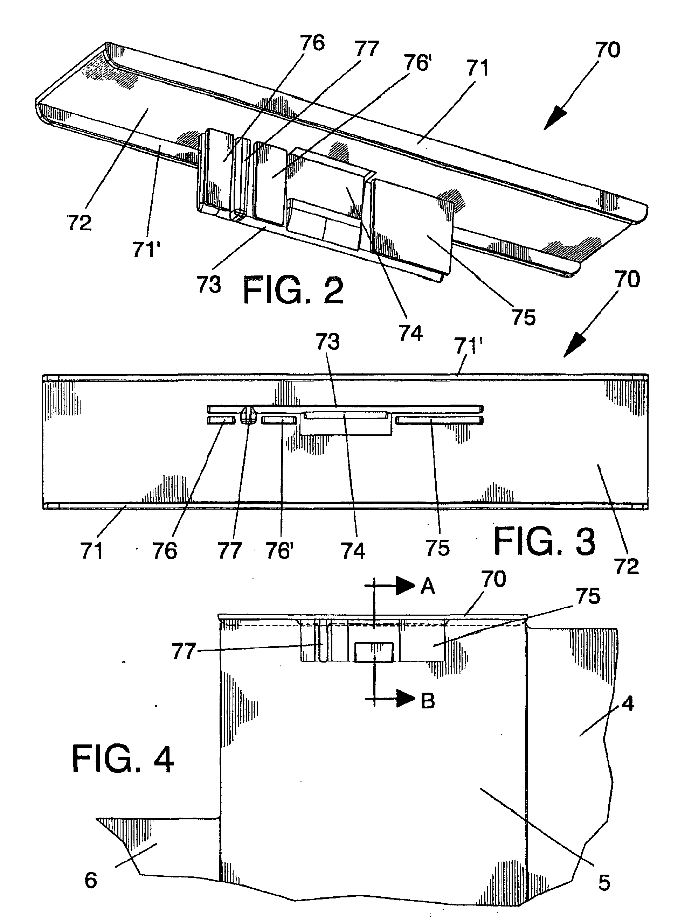

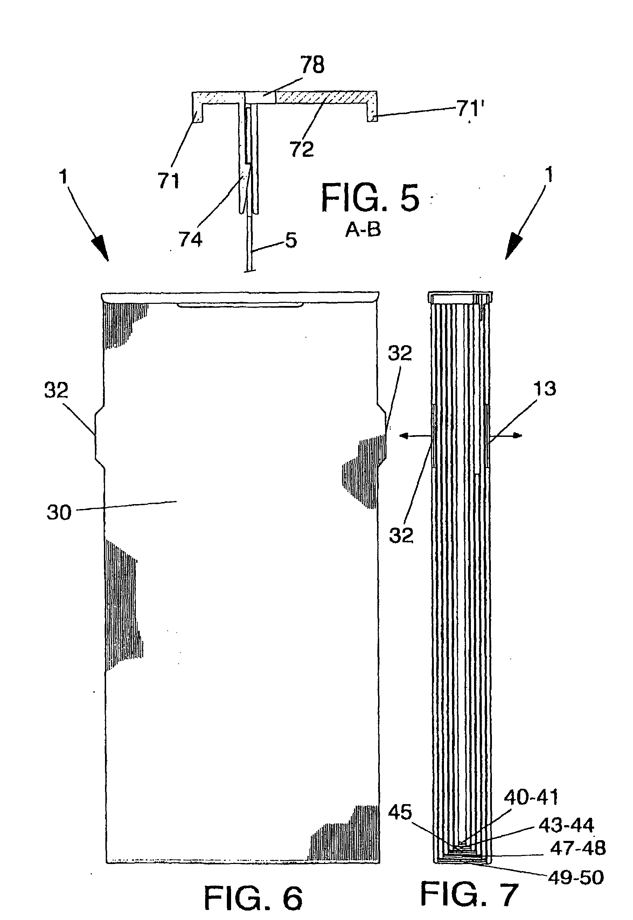

## Claims

1. An improved foldable sunshade for vehicles, **characterized in that** the foldable sunshade (1) is shaped as a rectangular shaped sheet subdivided into two rectangular alignments located in the upper and lower area of similar two to two dimensions, having an upper alignment formed by practically rectangular areas (2), (3), (4), (5), (6), (7), (8), (9), (10) and (11), and in the lower part (21), (22), (23), (24), (25), (26), (27), (28), (29) and (30), the areas of the upper and the lower alignment being similar to each other with the exception of the areas (5), (6) and (7), the last two having a similar lower width and smaller length, and the area (5) having a rectangular perforation (5') and a slit line (5"), two trapezoidal protrusions or flaps existing in the outer area.

2. An improved foldable sunshade for vehicles according to claim 1, **characterized in that** the areas (11) and (30) have two protrusions or flaps (13) and (32) in coincidence with their larger sides.

3. An improved foldable sunshade for vehicles according to the previous claims , **characterized in that** the semi-rectangular areas (11) and (30) have two lateral protrusions or flaps (12) and (31) in coincidence with the smaller outer sides, forming a trapezoidal recess in the central area.

4. An improved foldable sunshade for vehicles according to the previous claims, **characterized in that** the upper and lower alignments of the laminar body of the sunshade (1) are separated by quasi-rectangular areas of similar length and the width growing from the left area to the right, forming areas (41), (42), (43), (44), (45), (46), (47), (48), (49) and (50).

5. An improved foldable sunshade for vehicles according to the previous claims, **characterized in that** the areas (50) and (49) are backing each other, the areas (10) and (12) of the upper part and (29) and (30) of the lower part being juxtaposed backing each other.

6. An improved foldable sunshade for vehicles according to the previous claims, **characterized in that** the central areas (47) and (48) are backing each other on the surface of the areas (49) and (50), the areas (8) and (9) of the upper line and (27) and (28) of the lower area being adjacent.

7. An improved foldable sunshade for vehicles according to the previous claims, **characterized in that** by folding the laminar body (1), the areas (45) and (46) are juxtaposed and at the same time the areas (6) and (7) of the upper part and the areas (25) and (26) of the lower part are backing each other.

8. An improved foldable sunshade for vehicles according to the previous claims, **characterized in that** by folding the laminar body (1), the central areas (43) and (44) are adjacent, and at the same time the areas (4) and (5) and (23) and (24) are adjacent.

9. An improved foldable sunshade for vehicles according to the previous claims, **characterized in that** the areas (41) and (42) are juxtaposed and at the same time the areas (2) and (3) of the upper line and the areas (21) and (22) of the lower area are adjacent.

10. An improved foldable sunshade for vehicles according to the previous claims, **characterized in that** once the laminar body (1) is transformed into a parallelopepedic body, it is retained by a body of plastic material (70) at the ends of the smaller side opposite the one formed by the fold lines, provided with side protrusions (71) and (71'), forming a ninety degree angle with the central area (72)) which has a rectangular protrusion (73) provided with a thickening (77) delimited by two areas referenced with (76) and (76') located parallel to the protrusion (73), having a vertical rectangular area (74) in the central area provided with a rectangular shaped transversal thickening coupled inside of the perforation (5'), located in the area (5) of the laminar body of the sunshade (1), having an equally rectangular area (75) on the side opposite the area (73), a slit existing between the areas (76), (76') and (75).
